Europäisches Patentamt

European Patent Office

Office européen des brevets

(11) Publication number: **0 228 269**
**A2**

# EUROPEAN PATENT APPLICATION

(21) Application number: **86309995.8**

(51) Int. Cl.⁴: **E 01 B 9/16**

(22) Date of filing: **22.12.86**

(30) Priority: **24.12.85 GB 8531731**

(43) Date of publication of application:
**08.07.87 Bulletin 87/28**

(84) Designated Contracting States: **DE ES FR IT SE**

(71) Applicant: **MULTICLIP CO. LTD.**
**Unit 2, Haxter Close, Belliver Industrial Estate**
**Roborough, Plymouth PL6 7DD  (GB)**

(72) Inventor: **Henry, Hugh Richard**
**The Old House**
**Pirbright Surrey  (GB)**

(74) Representative: **Kearney, Kevin David Nicholas et al**
**KILBURN & STRODE 30 John Street**
**London, WC1N 2DD  (GB)**

(54) Securing devices.

(57)  There is provided a spiral member which serves to improve the grip of a screw-in rail spike in a railway sleeper. It comprises an elongate spiral, preferably of aluminium alloy, having, in cross section in a plane extending radially of the axis, an outwardly facing, substrate-penetrating, pointed profile and an inwardly facing profile of shallow curved form. The outwardly facing profile may be assymetrical or symmetrical.

FIG. 6.

EP 0 228 269 A2

Bundesdruckerei Berlin

**Description**

Securing Devices

The present invention relates to securing screw thread devices in receptive substrates.

A particular application of the type of screw threaded device with which the present invention is concerned is in the railway sleeper field where problems have developed with screw-in rail spikes or so-called screw spikes employed to secure chairs of railway lines to the sleepers. The present invention provides spiral members which are utilised to increase the resistance to pull out of screw spikes from railway sleepers. The spiral members, in radial cross section, have a profile which is generally triangular, with the base of the triangle intended to be engaged by the root of the screw thread of the rail spike upon its reinsertion, and the pointed apex of the triangle serves as a cutting or thrusting edge which is forced into the sleeper on reinsertion of the rail spike.

The spiral member preferably has a tool-engaging tail, which extends axially and backwardly down the axis of the spiral member. This enables the spiral member to be screwed into the hole of the sleeper, from which a screw spike has been removed, by a tool having an axially extending recess in its lower end, which recess is adapted to engage the tail of the spiral member when the tool is rotated in one direction and to retreat from it when the tool is rotated in the opposite direction.

According to one aspect of the present invention a spiral member which serves to improve the grip of a screw threaded device e.g. a screw-in rail spike, in a receptive substrate, e.g. a railway sleeper, comprises an elongate spiral formed of a material which is capable of being forced into the substrate, the spiral member having a cross section, in a plane extending radially of the axis of the member, which affords an outwardly facing, substrate-penetrating, profile of generally pointed form, and an inwardly facing profile for engagement by the screw thread device, which is of shallow curved form.

The shallow curve of the inwardly facing profile in said plane may take varying forms, but in one particular arrangement the curve of the inwardly facing profile in said plane has end regions thereof which are distanced apart by a first imaginary line extending between them of which half the length (said half being defined herein as length X) is significantly longer than the length (defined herein as length Y) of a second imaginary line extending from the mid point of the first line, and at right angles thereto, to a point of intersection with the curve of the inwardly facing profile.

The ratio of X:Y is preferably between 3:1 and 1.5:1, and specifically may be approximately 2:1.

The curve of the inwardly facing profile may conveniently be of substantially semi-elliptical form.

According to another aspect of the present invention a spiral member which serves to improve the grip of a screw threaded device in a receptive substrate, e.g. a screw-in rail-spike in a railway sleeper, comprises an elongate spiral formed of a material which is capable of being forced into the substrate, the spiral member having a cross section, in a plane extending radially of the axis of the member, which affords an outwardly facing, substrate-penetrating profile of generally pointed form with upper and lower converging faces, the length of one face in said plane being greater than the length of the other face. The upper and lower converging faces may meet in a sharp point, or alternatively the upper and lower converging faces may meet at a blunt point, which is conveniently convexly curved. The latter arrangement is found in certain circumstances to be advantageous in producing an adequate engagement with the substrate without undue tearing or cutting thereof as can occur with a sharp point.

The spiral members of the type discussed above are conveniently formed of a malleable matterial e.g. metal and may be produced, by extrusion or drawing methods, of indefinite length of the spiral which can then be cut to the required length. The asymmetric form referred to above, i.e. where the length of one of the upper and lower converging faces of the external profile is greater than the other, when produced by extrusion or drawing methods, and depending upon the intended application of the cut length of the spiral member, may have one of its ends provided with an axially extending tool-engaging drive pin of the type disclosed above. Alternatively the device may be made by moulding.

The invention, according to this aspect, is based partially on a recognition that a typical British screw-in rail spike has the root of its screw thread disposed between a downwardly facing surface which is inclined to a radius at a relatively steep angle of about 70° and an upwardly facing surface which is inclined to a radius at a relatively shallow angle of about 30°, i.e. the root of the screw thread is not symmetrically disposed with respecct to the turns of the teeth between which it lies.

A similar assymetry applies with some continental systems, for exaple a German system, but in this case the assymetry is inverted, since the upwardly facing surface of a screw thread of a rail spike, for German railway systems, is relatively steeply inclined, for example at 45°, and the downwardly facing surface of the screw thread is inclined at a relatively shallow angle, of approximately 15°.

By providing an extruded or drawn spiral which can be cut to length, and then formed with its tool engaging drive pin either end of the spiral member, it is possible to use the same extrusion for either a German or a British system. Furthermore, by such arrangemets, it is possible to position the pointed outer face of the profile of the spiral member at an axial position which is displaced with respect to the root of the screw thread of the rail spike (and which engages the inner surface of the profile), as a result of which the pointed extremity of the outer profile is more closely positioned at an axial mid point between the pitch of the external screw thread of the rail spike.

In certain arrangements the assymetric form of the external profile may be combined with the shallow curved form of the inner profile, but in other instances the inner profile may be either flat or of arrrow-head form. In other words the assymetric form of the external profile can be combined with varying inner profiles. Equally the shallow curved or semi-eliptical form of the inner profile can be combined with either asymmmetric or symmetric external profiles.

The spiral member is preferably made of intermediately malleable material. The term "intermediately malleable" as used herein means a material which when in a triangular profile of 50 to 70° apex angle is of low enough malleability or great enough hardness to be capable of the triangular profile being forced into softwood and preferably also into mahogonany or jarrah wood, whilst being of greater malleability than steel and preferably also hard brass wire.

The spiral member is preferably made of aluminium or aluminium alloy; such material is of intermediate malleability, but the use of plastics materials of appropriate hardness is not excluded.

The invention may be carried into practice in various ways but certain specific embodiments will now be described by way of example to illustrate the invention with reference to the accompanying drawings in which:

Figure 1 is a diagrammatic vertical cross section showing a railway sleeper rail-spike fully reinserted into a hole in a sleeper with a spiral member, in accordance with the present invention, positioned around the screw spike, and having been driven outwardly into the wood of the sleeper by the reinsertion of the screw spike;

Figure 2 is a diagrammatic side view, the left hand side in cross section and the right hand side in elevation, of the lower end of the spiral member in Figure 1, the cross sectional profile of the spiral member of Figure 2 being the same as that in Figure 1 and Figures 3 to 6, this being a typical profile to suit a British railway screw spike of the type shown in Figure 1;

Figure 3 is a fragmentary, partial longitudinal cross section, of a wooden sleeper with a screw spike and spiral member located therein which is of the same form, but on a larger scale than, the arrangement of Figures 1 and 2;

Figure 4 is a side elevation, partly in cross section, showing the spiral member of Figures 1 to 3 being inserted into a worn hole in a sleeper by the use of an insertion tool, the spiral member being nearly fully inserted in the old threads of the hole in the sleeper, i.e. it is shown just prior to the stage of the unwinding of the insertion tool which will leave the spiral member in the hole ready for reinsertion of the screw spike;

Figure 5 is an end view looking up the insertion tool from its lower end in Figure 4;

Figure 6 is an enlarged, partial cross section, of part of the screw-spike and spiral member shown in Figures 1 to 3;

Figure 7 is a view, similar to Figure 3, of an alternative spiral member for use in German railway systems, the cross section of the spiral in Figure 7 being the same as that of Figure 1 to 6, but inverted, and the screw-spike shown in Figure 7 being representative of German and other continental screw spikes, and

Figures 9 to 11 show alternative cross sections of spiral member, those of Figures 8 and 11 being of assymetric form, and those of Figures 9 and 10 of being symmetrical form.

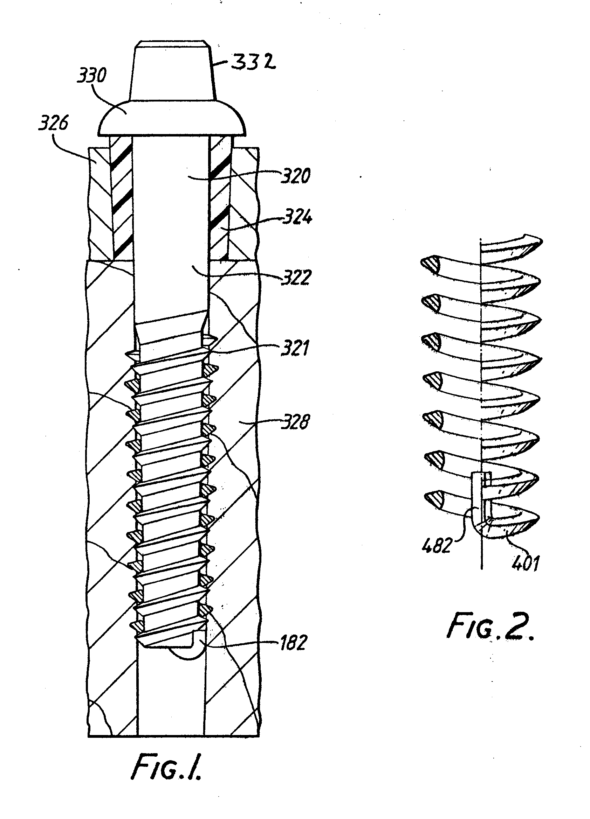

Referring firstly to Figure 1, this illustrates, in vertical elevation, a British railway screw spike 320 which is usually made of mild steel and the threaded region 321 thereof generally tapers from its bottom end, out to where it meets an unthreaded shank 322 which is surrounded in use by a plastics sleeve 324 which passes through the chair 326 which is to be secured to a sleeper 328. The top end of the rail-spike has a flat bottomed, round topped, flange 330 which bears on the upper end of the plastics sleeve 324. Figure 1 shows a spiral member 440, of a form according to the present invention which has been utilised to resecure the screw-spike 320 into the sleeper 328.

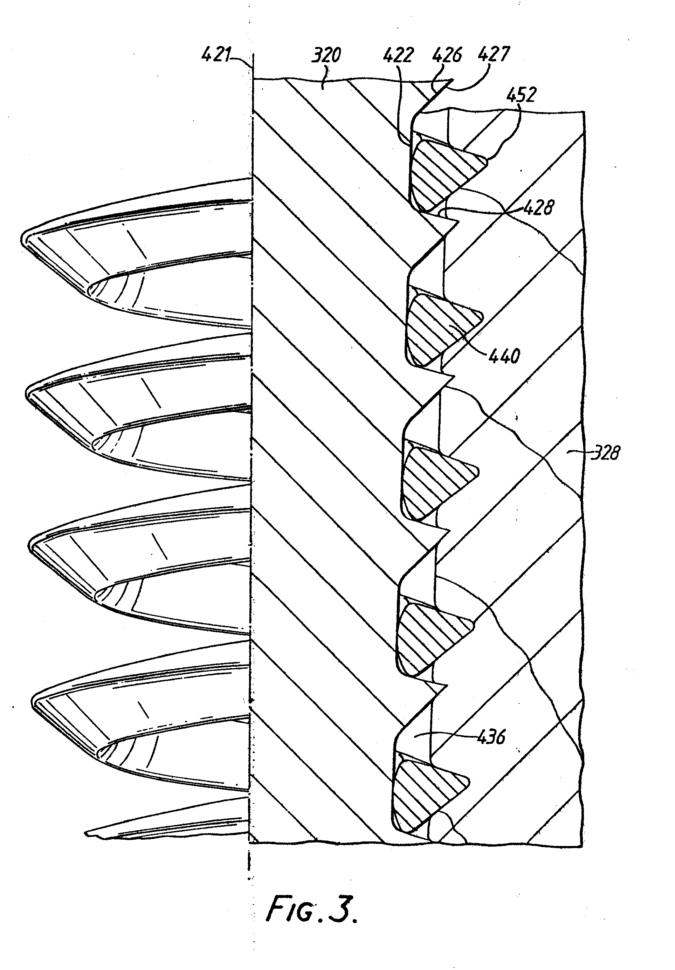

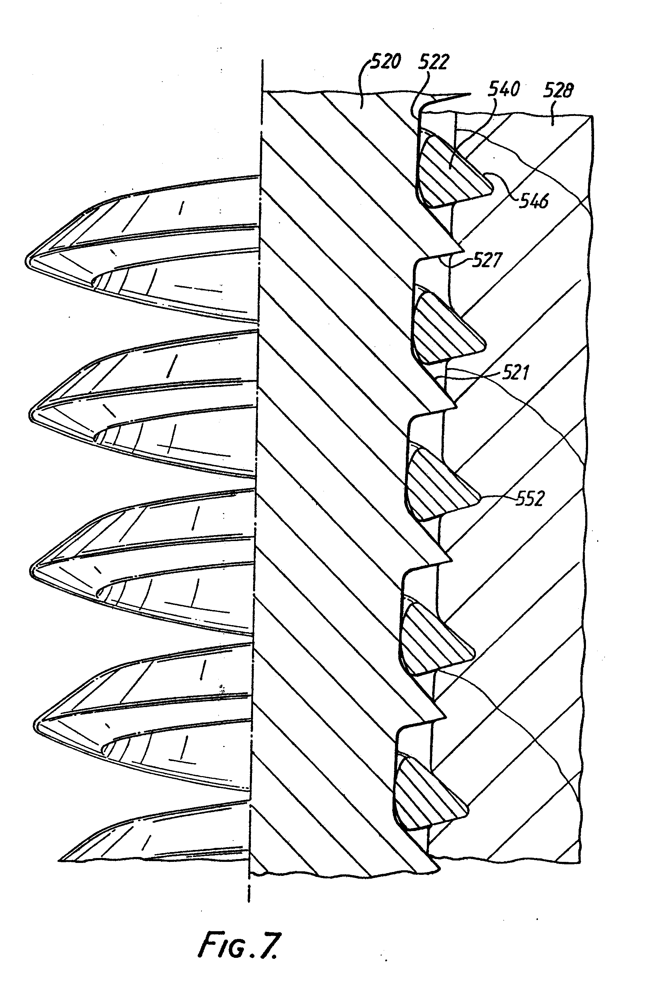

Figure 3 is a fragmentary partial enlarged longitudinal cross section of the wooden sleeper 328 with the spiral member 440 located therein, and shows part of the screw spike 320 in cross section. The root 422 of the screw thread of the spike is tapered from top to bottom; thus a line passing through each root in Figure 3 is inclined at angle to the centre line 421. The taper is typically 1mm in the 4 inches (10.2cm) length of the screw threaded portion of the spike, but some screw spikes are not tapered. The root carries a single helical thread 426 which engages the sleeper 328. The thread has a downwardly directed face 427 disposed at an angle of about 70° to the longitudinal axis 421 of the screw spike, and a lower or upwardly directed face 428 disposed at an angle of about 30° to the same axis. The precise dimensions of screw spikes of the type shown in Figure 3 differ in some countries from those used in the United Kingdom, but are generally of similar orders of magnitude. Reference will be made later to Figure 7 which exemplifies one continental rail-spike, for example used in Germany.

When the screw spike 320 is first screwed into the wood of the sleeper 328 i.e. on original installation, the wood conforms quite closely to the surface of the root 422, and the thread on the screw spike. The condition which obtains after a period of use is shown in diagrammatic form on the right hand side of Figure 3. Here the surface 436 of the wood, which before use contacted or was close to the root 422, has retracted away from the root, and the area of wood in contact with the upper surface 427 of the thread has been very severely reduced.

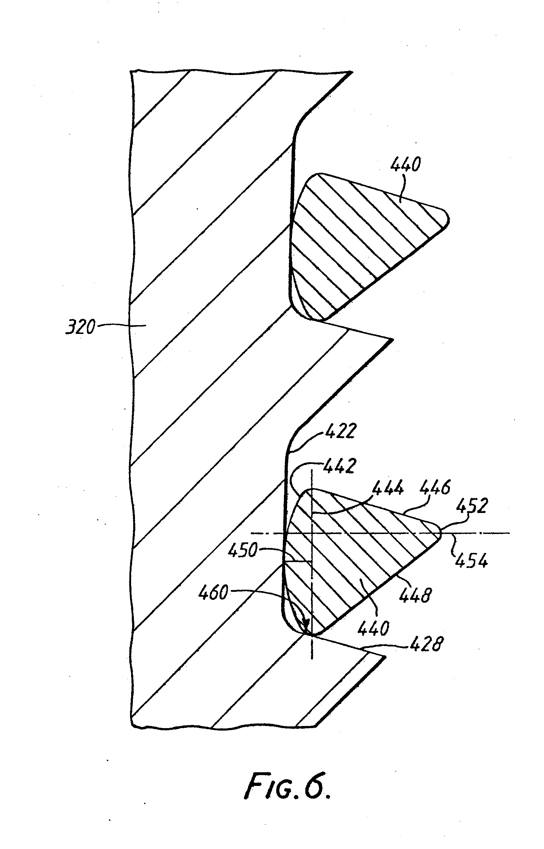

Figures 2, 3 and 6 illustrate one form of profile of spiral member in accordance with the present invention. The cross section is essentially assymetric. As can be see more clearly in Figure 6 the inner face of the profile of the spiral member 440 is of shallow curved form as shown at 442. This cross section is generally semi-elliptical, having a major axis or imaginary line 444 which is the greatest width of the profile and which extends between the ends of the curve 442 where it merges with the upper and lower faces 446 and 448 respectively of the outer face of the profile. The minor axis 450, extending from the mid-point of the major axis or imaginary line 444, meets the mid-point of the shallow curve 442 of the inwardly facing profile in the region at which the root 422 of the rail-spike 320 engages the inner face of the profile of the spiral member 440. In the embodiment shown the length of the minor axis is 1.3mm and the length of the major axis 444 is 5.5mm, i.e. the ratio of major to minor axis is approximately 4.25:1. The ratio of X:Y is 2.125:1.

It will be seen from Figure 6 that the assymetric form of the profile positions the apex 452 of the tooth or point of the profile generally on a line 454 which is spaced above the minor axis 450 of the shallow curved surface 442. The apex 452 of the external profile is thus positioned rather more centrally between the axial positions of successive turns of the tooth of the screw spike than would be the case if the profile was symmetrical. It will be noted in Figure 6 that the apex 452 is slightly rounded, or of blunt form, which acts to penetrate the wood in a compressive rather than cutting manner.

The spiral member may be made either by extrusion or drawing of the generally assymetric cross section described above. The material used may be aluminium alloy HE9 which is in accordance with BS1474 No. 6064 has a proof stress value of 160 MPa, a tensile strength of 185 MPa and an elongation at break of 7%. Its composition is as follows: 0.2-0.6% Si, 0.35% Fe, 0.1% Cu, 0.1% Mn, 0.45-0.9% Mg, 0.1% Cr, 0.1% Zn, 0.1% Ti, balance aluminium.

Other grades of alloy thought likely to be useful are set out in Table 1 below with their physical properties.

## Table 1

| Alloy | 0.2% Proof stress MPa | Tensile Strength MPa | Elongation % |
|---|---|---|---|
| HE9-6063 TB | 70 | 130 | 14 |
| HE30-6082 TB | 120 | 190 | 14 |
| HE30-5083 O | 125 | 275 | 13 |
| HE9-6063 TE | 110 | 150 | 7 |

Thus more broadly materials with tensile strengths in the range 130 to 275 and elongations of 7 to 14% are thought to be suitable.

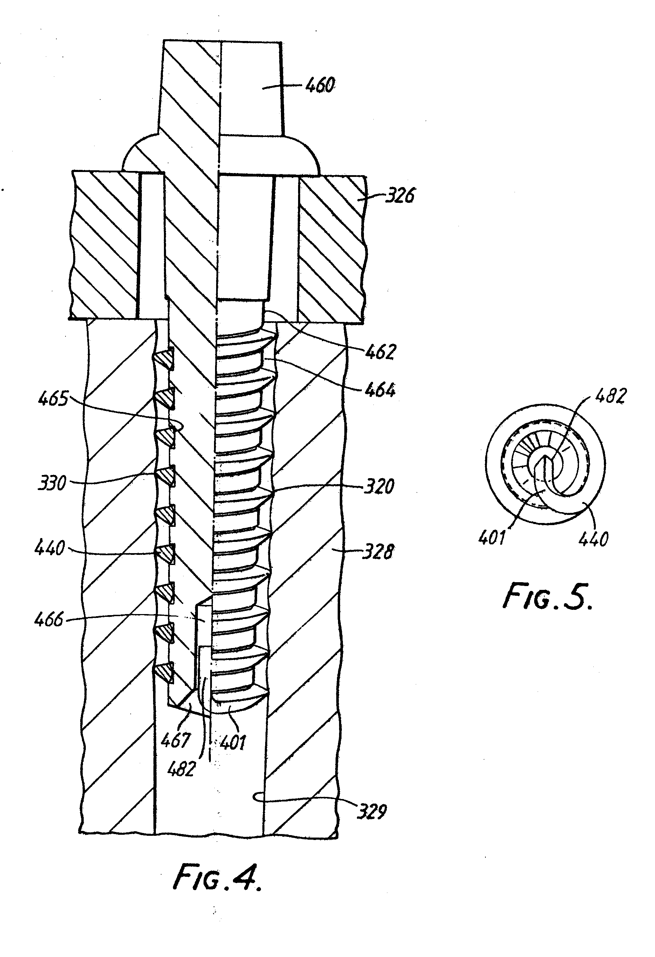

It will be observed from Figure 2 that the lower end of the spiral is turned at 401 in towards the longitudinal axis of the spiral member and bent up and back at 482 to lie along the axis and to extend about one turns length back straight up the axis of the spiral member to form a drive pin. The spiral member is inserted by using an insertion tool of the type shown in Figure 4. In cross section the tool shown is generally a cut-down version of the screw spike which is to be secured in the worn sleeper by means of the spiral member 440. Thus the tool has a rectangular head 460, and the shank 462 is turned down slightly to reduce its diameter to ensure free passage through the chair 326, and the shank at its junction with the first turn of the thread is turned down sufficiently to prevent it gripping the inside of the hole.

The threads are turned down to form a spiral taper flat 464 and a rectangular-section spiral groove 465 is formed between the flat, the axial width of the groove preferably being such as to provide a clearance on either side of each turn of the spiral member 440, when located in the groove 465, so that the spiral member is relatively loose on the tool. The turned back tail or drive pin 482 of the spiral member enters an axial hole 466 in the lower end of the tool. The pin 482 is a close but free fit in the hole 466. The bottom end of the tool also has a generally radially extending shoulder 467 extending out from the hole 466. This shoulder 467 engages the inturned end portion 401 of the drive pin 482 of the spiral member and is preferably slightly rounded to ensure that the malleable drive pin 482 is not sheared by the hard metal of the insertion tool.

Figure 4 shows the insertion tool, with the spiral member 440 surrounding it, and inserted into the damaged hole 329 in the sleeper 328, with the apex of the thread of the spiral member engaging lightly in the worn threads 330 in the hole 329 of the sleeper from which the screw spike has been removed. After the insertion of the spiral member 440 into the hole 329 in the manner shown in Figure 4, using the tool shown, the tool may be unwound and removed, the effect of friction preventing the spiral member 440 unwinding, during tool removal.

The screw spike 320 can then be reinserted fully as shown in Figure 1, at which time the drive pin 182 is pushed downwardly and to one side by the lower end of the screw spike. The spiral member 440 has also rotated down the thread in the sleeper on being forced outwardly into the wood by the screw spike.

The shallow curved form of the inwardly facing part of the profile of the spiral member provides for good tolerance take up by the spiral member 440 when engaged by the screw spike on reinsertion, and the malleability of the material of the spiral member 440 permits of some distortion of the inwardly facing profile as the screw spike forces the outwardly facing assymetric and blunt pointed external surface of the profile into the sleeper. As shown in Figures 3 and 6, the region 460 where the smoothly curved inwardly facing profile 442 of the spiral member merges with the lower face 448 of the outwardly facing profile of the spiral member rests on the upwardly facing surface 428 of the thread of the spiral member so that the thrust between the rail-spike 320 and the spiral member, on reinsertion of the rail-spike generally occurs at the region 460 as indicated in Figure 6. A certain amount of distortion can also occur at this region during reinsertion without any appreciable loss of pull-out strength. The overall effect of the cross section of the spiral member shown in Figures 1 to 6 is to facilitate reinsertion of the screw and engagement between the screw spike and the spiral member.

Figure 7 shows a continental, e.g. German, railway spike 520 reinserted into a railway sleeper 521 with the interposition of a previously inserted spiral member 540, the profile of which is an exact inversion of the profile of the spiral member of the embodiment of Figures 1 to 6.

This permits the spiral members for both systems to be produced from the same extrusion die, or by the same drawing tool, the appropriate cut length of spiral member being inverted for the German system as compared with the British system, and where a drive pin 182 is utilised in the German system, this will obviously be formed at the opposite end in order to be at the lower end of the spiral in the German system.

It will be observed that the apex 552 of the external profile of the spiral member 540, whilst not precisely mid-way between adjacent turns of the screw spike, is quite close to such mid-point, and thus, as with the British system, the screw spike forces the spiral member into the sleeper in a region which is generally more central than has previously been the case.

In both the British and German systems the spiral tooth of the screw spike also reengages the bore of the sleeper as shown in Figures 3 and 7.

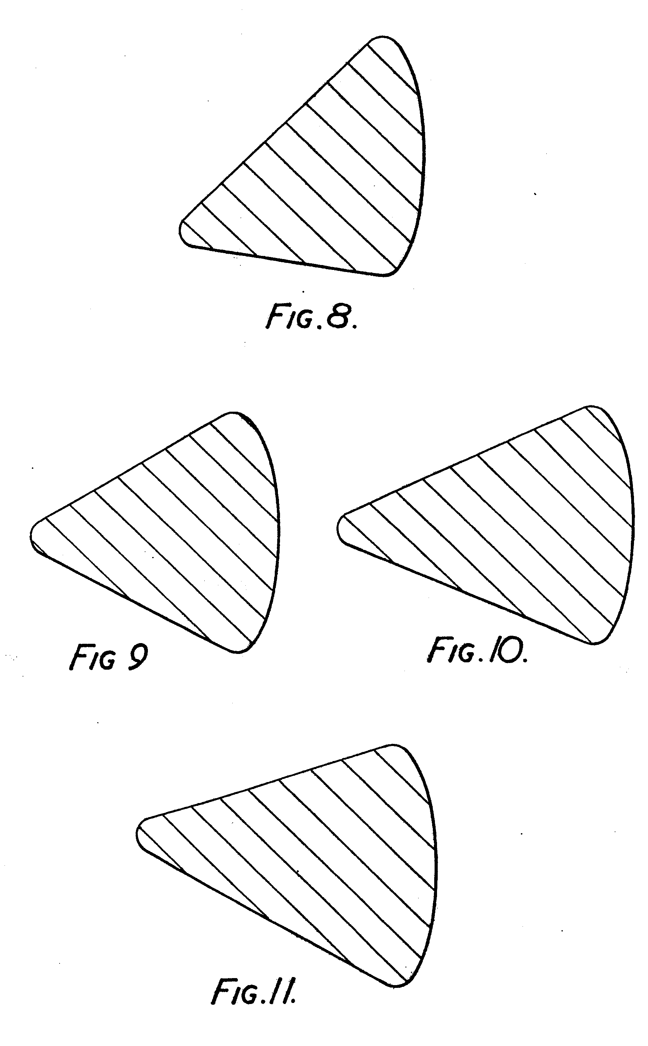

Referring now to Figures 9 to 11 these show further alternative profiles each of which has an inwardly facing surface of generally shallow curved form and an outwardly pointed profile with a slightly convexed point rather than a sharp point. The embodiments of Figures 9 to 10 are symmetric about horizontal lines extending from the blunt point of the profile, whereas the profiles of Figures 8 and 11 are assymetric.

## Claims

1. A spiral member which serves to improve the grip of a screw threaded device in a receptive substrate, the member comprising an elongate spiral formed of a material which is capable of being forced into the substrate, the spiral member having a cross section, in a plane extending radially of the axis of the member, which affords an outwardly facing, substrate-penetrating, profile of generally pointed form, and an inwardly facing profile for engagement by the screw thread device, which is of shallow curved form.

2. A spiral member as claimed in claim 1 in which the curve of the inwardly facing profile in said plane has end regions thereof which are distanced apart by a first imaginary line extending between them of which half the length (said half being defined herein as length X) is significantly longer than the length (defined herein as length Y) of a second imaginary line extending from the mid point of the first line, and at right angles thereto, to a point of intersection with the curve of the inwardly facing profile.

3. A spiral member as claimed in claim 2 in which the ratio of X:Y is between 3:1 and 1.5:1.

4. A spiral member as claimed in claim 3 in which the ratio of X:Y is approximately 2:1.

5. A spiral member as claimed in claim 2, 3 or 4 in which the curve of the inwardly facing profile is substantially semi-elliptical.

6. A spiral member which serves to improve the grip of a screw threaded device in a receptive substrate, the spiral member comprising an elongate spiral formed of a material which is capable of being forced into the substrate, the spiral member having a cross section, in a plane extending radially of the axis of the member, which affords an outwardly facing, substrate-penetrating, profile of generally pointed form with upper and lower converging faces, the length of one face in said plane being greater than the length of the other face.

7. A spiral member as claimed in claim 6 in which the upper and lower converging faces meet at a blunt point.

8. A spiralmember as claimed in any one of claims 1 to 7 in which the spiral member has one end of its ends, which is intended to be the leading end of the member on insertion in a hole in the substrate, turned inwardly and back down the axis of the member so as to be disconnectably engagable by a tool inserted down the centre of the spiral member.

9. A spiral member which serves to improve the grip of a screw threaded device in a receptive substrate, the spiral member comprising an elongate spiral formed of a material which is capable of being forced into the substrate, the spiral member having a cross section, in a plane extending radially of the axis of the member, which affords an outwardly facing profile as claimed in any one of claims 6 to 8, and an inwardly facing profile as claimed in any one of cliams 1 to 5.

10. A spiral member as claimed in any one of claims 1 to 9 which is made up of intermediately malleable material (as defined herein).

0228269

FIG.1.

FIG.2.

0228269

FIG.3.

0228269

FIG.4.

FIG.5.

0228269

FIG. 6.

0228269

FIG.7.

0228269

FIG.8.

FIG 9

FIG.10.

FIG.11.